(19) **Europäisches Patentamt**
**European Patent Office**
**Office européen des brevets**

(11) **EP 2 071 309 B1**

(12) **FASCICULE DE BREVET EUROPEEN**

(45) Date de publication et mention
de la délivrance du brevet:
**05.04.2017 Bulletin 2017/14**

(51) Int Cl.:
***G01J 5/24*** *(2006.01)*

(21) Numéro de dépôt: **08305911.3**

(22) Date de dépôt: **11.12.2008**

(54) **Dispositif pour la détection d'un rayonnement infrarouge comportant un bolomètre résistif d'imagerie, système comprenant une matrice de tels bolomètres, et procédé de lecture d'un bolomètre d'imagerie intégré dans un tel système**

Vorrichtung zur Erkennung von Infrarotstrahlung, die ein bildgebendes Widerstandsbolometer umfasst, System, das eine Matrix solcher Bolometer umfasst und Verfahren zum Auslesen eines solchen Systems

Device for detecting infrared radiation comprising an imaging resistive bolometer, system comprising an array of such bolometers and method of reading an imaging bolometer integrated in such a system

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.12.2007 FR 0759787**

(43) Date de publication de la demande:
**17.06.2009 Bulletin 2009/25**

(60) Demande divisionnaire:
**17157363.7**

(73) Titulaire: **ULIS**
**38113 Veurey Voroize (FR)**

(72) Inventeurs:
• **Dupont, M. Benoît**
 **1180 Bruxelles (BE)**
• **Vilain, M .Michel**
 **38450 Saint-Georges de Commiers (FR)**

(74) Mandataire: **Cabinet Laurent & Charras**
**Le Contemporain**
**50 Chemin de la Bruyère**
**69574 Dardilly Cedex (FR)**

(56) Documents cités:
**EP-A- 1 211 888**   **WO-A1-98/35212**
**US-A1- 2005 029 453**   **US-A1- 2006 231 760**

**Description**

**DOMAINE DE L'INVENTION**

La présente invention a trait au domaine de l'imagerie infrarouge et de la pyrométrie bolométrique.

Plus particulièrement, la présente invention concerne un dispositif pour la détection d'un rayonnement infrarouge comportant un bolomètre résistif d'imagerie. Elle concerne également un système comprenant une matrice de tels dispositifs ainsi qu'un procédé de lecture d'un bolomètre d'imagerie intégré dans un tel système.

**ETAT ANTERIEUR DE LA TECHNIQUE**

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs de détection appelés "détecteurs quantiques" qui eux, nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Un tel détecteur non refroidi associe généralement :

- des moyens d'absorption du rayonnement infrarouge et de conversion de celui-ci en chaleur ;
- des moyens d'isolation thermique du détecteur, de telle sorte à permettre à celui-ci de s'échauffer sous l'action du rayonnement infrarouge ;
- des moyens de thermométrie qui, dans le cadre d'un détecteur bolométrique, mettent en oeuvre un élément résistif ;
- et des moyens de lecture des signaux électriques fournis par les moyens de thermométrie.

Les détecteurs destinés à l'imagerie infrarouge sont classiquement réalisés sous la forme d'une matrice de détecteurs élémentaires, ou bolomètres, selon une ou deux dimensions, lesdits bolomètres étant suspendus au dessus d'un substrat, généralement réalisé en silicium, via des bras de soutien.

Il est usuellement ménagé dans le substrat des moyens d'adressage séquentiel des détecteurs élémentaires et des moyens d'excitation électrique et de pré-traitement des signaux électriques générés par ces détecteurs élémentaires. Ce substrat et les moyens intégrés sont communément désignés par le terme « circuit de lecture ».

Pour obtenir une scène par l'intermédiaire de ce détecteur, on projette la scène à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

On observe cependant que la résistance thermique $R_{th}$ des bras de soutien, associée à la capacité calorifique $C_{th}$ d'un bolomètre élémentaire, définit pour celui-ci une constante de temps thermique $\tau_{th}$, égale au produit $R_{th}C_{th}$ et habituellement de l'ordre de la dizaine de millisecondes.

Cette constante de temps thermique propre à chaque bolomètre présente un effet dommageable, qui limite la pénétration des détecteurs bolométriques non refroidis sur le marché de la vision embarquée ou de la poursuite d'objets en mouvement par exemple.

La constante de temps $\tau_{th}$ d'un bolomètre est élevée, ce qui limite son temps de réponse. Ainsi, si la scène est sujette à des variations de contraste rapides, comme par exemple l'intrusion d'un objet de température plus élevée (ou moins élevée) que celle du fond de la scène (on parle alors d'objet « chaud », respectivement « froid »), le bolomètre peine à suivre de telles variations. Il s'en suit que le bolomètre présente une mémoire thermique d'une trame de lecture à la suivante. Le déplacement d'un objet chaud (respectivement froid) dans la scène donnera ainsi lieu à une traînée dans l'image formée.

Cet effet est dommageable de la même manière devant une scène immobile mais qui présente localement des variations rapides de température. Le bolomètre peine également à suivre de telles variations qui sont plus rapides que sa constante de temps, et donc peine à rendre fidèlement la scène.

Par ailleurs, la dispersion de résistance des divers détecteurs élémentaires conduit à une dispersion du courant qui les traverse au cours de la lecture. Il en résulte une dispersion de signal devant une scène uniforme (appelée dispersion « d'offset »), ainsi qu'une dispersion de sensibilité, ou de gain, à une variation de température.

La dispersion de résistance trouve son origine principalement au niveau des dispersions technologiques d'élaboration, ainsi qu'au niveau de la distribution spatiale de température du substrat, et de l'environnement radiatif.

Classiquement, ces dispersions sont compensées par un calcul de correction d'image, dite correction « deux points », hors du plan focal, après acquisition expérimentale des paramètres dispersifs d'offset et de gain.

Afin de pallier de tels inconvénients, une réduction de la constante de temps $\tau_{th}$ des bolomètres peut être tentée.

Toutefois, diminuer la capacité calorifique $C_{th}$ d'un bolomètre est difficile dans la mesure où celle-ci est dépendante de la quantité de matière utilisée pour la fabrication du bolomètre. Or, une diminution de la masse du bolomètre a pour conséquence directe d'augmenter le bruit électrique de celui-ci, puisque la puissance du bruit électrique est liée au volume du bolomètre, au moins lors de la mise en oeuvre de matériaux thermométriques présentant un niveau de bruit basse fréquence non négligeable. Par ailleurs, la stabilité géométrique des structures sensibles ne peut être assurée qu'au-delà d'une quantité de matière structurale suffisante, non réductible à volonté.

Par ailleurs, diminuer la résistance thermique $R_{th}$ ne constitue pas non plus une solution satisfaisante. En effet, cela implique une diminution de l'isolation thermique du bolomètre vis-à-vis du substrat, c'est-à-dire sa sensibilité, car la résistance thermique $R_{th}$ est directement liée à la sensibilité de détection thermique du bolomètre, facteur primordial qui définit la résolution thermique du détecteur bolométrique.

On constate ainsi dans l'état de la technique qu'il est impossible d'obtenir un détecteur bolométrique qui soit à la fois exempt de phénomènes de traînée, et performant en termes de résolution thermique, c'est-à-dire avec un rapport signal/bruit élevé.

Généralement, un détecteur bolométrique de l'état de la technique est conçu pour une application particulière. Usuellement, la constante de temps $\tau_{th}$ d'un tel bolomètre est maximisée par augmentation de $R_{th}$ par construction jusqu'à un niveau de traînée jugé acceptable dans le cadre de cette application.

Des exemples de l'état de la technique sont donnés dans les documents WO9835212 et US 20050029453.

Le but de la présente invention est d'annuler la dualité défavorable entre la constante de temps des bolomètres et la résolution thermique de ceux-ci.

L'invention a donc pour but de fournir, à l'aide de moyens simples et robustes, des détecteurs bolométriques qui soient sensiblement exempts de phénomènes de traînée tout en étant performants en termes de résolution thermique.

## EXPOSE DE L'INVENTION

A cet effet, l'invention a pour objet un dispositif pour la détection d'un rayonnement infrarouge selon la revendication 1.

Selon l'invention, ce dispositif comporte des moyens de commande de la résistance du bolomètre d'imagerie par injection de courant dans celui-ci.

Ainsi, il est possible à l'aide de ces moyens de commande, de régler la résistance du bolomètre sur une valeur prédéterminée de référence au moins une fois pour chaque cycle de lecture de celui-ci. Ceci a pour effet d'annuler la mémoire thermique du bolomètre avant chaque lecture de ce dernier, et donc d'éliminer le phénomène de traînée, ainsi que les effets des variations de résistance parasites sans relation avec la scène.

En effet, en réglant ainsi la résistance du bolomètre sur la valeur de référence, la résistance du bolomètre lue est indépendante des évènements ayant eu lieu jusqu'à la fin du cycle précédent, avant le cycle courant de lecture, et notamment du déroulement de la scène et de la variation thermique du substrat antérieurs.

Cette résistance est également sensiblement indépendante de la position spatiale du bolomètre dans une disposition linéaire ou matricielle.

Par ailleurs, l'invention améliore sensiblement le détecteur au niveau de ses dispersions d'offset et de gain, et permet donc de simplifier sa mise en oeuvre.

Dans ce qui suit, on appelle « bolomètre d'imagerie » un bolomètre sensible au flux de scène incident et destiné à produire un élément d'image thermique de la scène observée.

Selon l'invention, les moyens de commande de la résistance du bolomètre d'imagerie comprennent des moyens d'injection d'un courant de référence ($I_{ref}$) prédéterminé dans celui-ci.

Ces moyens de commande comprennent des moyens de déconnection des moyens d'injection de courant lorsqu'une tension à une borne du bolomètre d'imagerie est sensiblement égale à une tension de référence prédéterminée. Cette tension de référence est elle-même avantageusement réglée à une valeur inférieure à une tension présente aux bornes du bolomètre d'imagerie lors d'une activation des moyens d'injection de courant, et lorsque le courant est sensiblement égal au courant de référence $I_{ref}$

Selon l'invention, les moyens de commande sont aptes à fixer la résistance du bolomètre d'imagerie sur une résistance de référence dépendante de la température du substrat au dessus duquel est formé le bolomètre d'imagerie.

Plus particulièrement, les moyens de commande comportent un amplificateur contre-réactionné par un bolomètre thermalisé au substrat, la sortie de l'amplificateur formant une correction d'une résistance de référence initiale déterminée pour une température initiale prédéterminée.

En variante, les moyens de commande comprennent un capteur de température du substrat et une unité de traitement d'informations (28) apte à déterminer, en fonction de la mesure de température, une correction d'une résistance de référence initiale déterminée pour une température initiale prédéterminée.

Ainsi, en commandant la thermalisation en fonction de la température du plan focal, la valeur courante de la résistance de référence à laquelle sont portés tous les bolomètres d'imagerie reste constamment positionnée comme il convient, c'est-à-dire préférentiellement au voisinage de la valeur minimale de la distribution naturelle des résistances des bolomètres d'imagerie, et cela quelle que soit la température du plan focal.

On notera en outre que les formes de circuits utilisés pour la commande en température de la résistance de référence, qu'elles soient analogiques ou numériques, permettent non seulement de maintenir le positionnement adéquat de la thermalisation lorsque la température opératoire évolue, mais aussi d'assurer ce positionnement adéquat lorsque les résistances des bolomètres évoluent en elles-mêmes au cours du temps, à température constante. En effet, les matériaux sensibles intégrés dans les membranes bolométriques présentent une tendance à dériver très lentement au cours de la vie du détecteur. Cette dérive limite au fil du temps la pertinence des réglages de stimuli initiaux même si le détecteur fonctionne à une température constante stabilisée.

L'invention a également pour objet un système de détection d'un rayonnement infrarouge comportant une matrice d'au moins une ligne de dispositifs comportant chacun :

- un bolomètre résistif d'imagerie ;
- et un circuit de mesure apte à être connecté électriquement au bolomètre d'imagerie pour une lecture d'une résistance de celui-ci.

Selon l'invention, ces dispositifs sont chacun du type susmentionné.

Selon l'invention, les moyens de commande de la résistance du bolomètre d'imagerie sont aptes à régler celle-ci sur une valeur prédéterminée de résistance commune pour tous les bolomètres d'imagerie de ladite matrice.

Selon l'invention, les moyens de commande de la résistance du bolomètre d'imagerie sont activés après chaque lecture de celui-ci.

En outre, le système peut comprendre des moyens de commande d'une dynamique thermique d'une scène détectée par la matrice en fonction d'une dynamique électrique de scène accessible par le système en fonction d'une dynamique prédéterminée du circuit de lecture. Ces moyens de commande de la dynamique de la scène détectée comprennent des moyens aptes à activer le circuit de lecture une fois écoulée une durée prédéterminée d'exposition depuis une désactivation des moyens de commande de la résistance du bolomètre d'imagerie.

Dans ce cas de figure, la durée d'exposition est sélectionnée pour que la dynamique de la scène détectée soit inférieure ou égale à une dynamique correspondante du circuit de lecture.

Selon un mode particulier de réalisation de l'invention :

- le circuit de lecture est apte à lire la matrice ligne par ligne,
- les moyens de commande de la résistance du bolomètre sont aptes à commander la matrice ligne par ligne,
- et le système comporte en outre des moyens de cadencement de la lecture et de la commande de la résistance du bolomètre, de sorte que la lecture d'une ligne de la matrice soit décalée d'un nombre prédéterminé de lignes de la commande des résistances d'une ligne de la matrice.

Selon une autre caractéristique avantageuse de l'invention, le système de détection comporte un circuit de commande de résistance associé à chaque bolomètre d'imagerie de la matrice bolométrique et apte à commander la résistance de celui-ci.

Alternativement, ledit système comporte un circuit de commande de résistance associé à chaque colonne de la matrice et apte à commander la résistance de chaque bolomètre de cette colonne.

La présente invention a également pour objet un procédé selon la revendication 15 de lecture d'un bolomètre résistif d'imagerie d'une matrice de bolomètres constitutive d'un système de détection d'un rayonnement infrarouge selon la revendication 1, dans lequel la résistance de celui-ci est réglée sur une valeur prédéterminée de résistance commune pour tous les bolomètres de la matrice au moins une fois par cycle de lecture de celui-ci.

**BREVE DESCRIPTION DES FIGURES**

L'invention sera mieux comprise à la lecture de la description qui va suivre, donnée uniquement à titre d'exemple, et réalisée en relation avec les dessins annexés dans lesquels des références identiques se rapportent à des éléments identiques ou analogues, et dans lesquels :

- la figure 1 est une vue schématique d'un détecteur bolométrique selon l'invention ;
- la figure 2 est une vue schématique d'un exemple d'agencement d'un bolomètre d'imagerie, d'un circuit de compensation, d'un circuit de mesure et d'un circuit de thermalisation entrants dans la constitution du détecteur de la figure 1 ;
- la figure 3 est un organigramme du fonctionnement du détecteur de la figure 1 ;
- la figure 4 est un tracé illustrant l'évolution temporelle de la distribution des niveaux de sortie d'une ligne du détecteur de la figure 1 disposé devant une scène à haute dynamique de température ; et
- la figure 5 est une vue schématique d'un détecteur bolométrique selon l'invention.

## DESCRIPTION DETAILLEE DE L'INVENTION

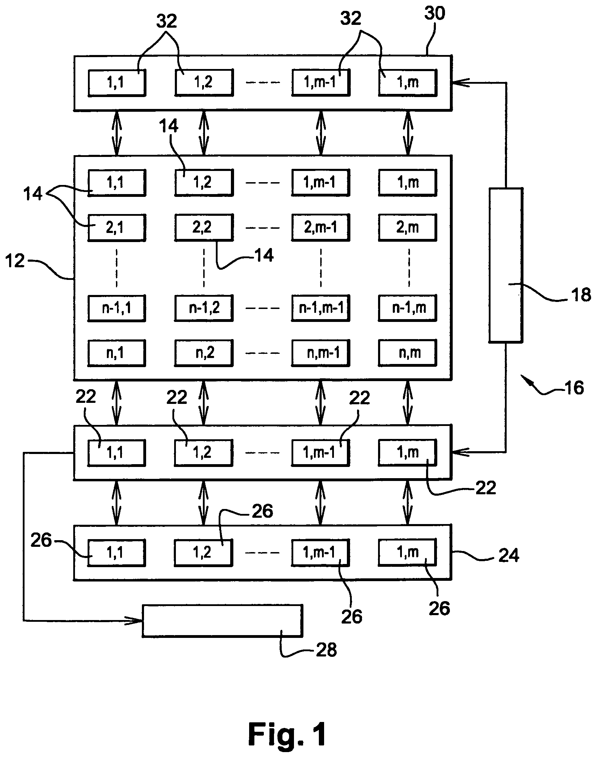

On a illustré schématiquement sur la figure 1 un détecteur bolométrique qui comprend :

- une matrice bidimensionnelle **12** d'imagerie comprenant $\underline{n}$ lignes et $\underline{m}$ colonnes de bolomètres résistifs d'imagerie **102,** où $\underline{n}$ et $\underline{m}$ sont des entiers supérieurs ou égaux à 1. La matrice d'imagerie **12** est agencée dans le plan focal d'une optique transparente aux infrarouges (non représentée) ;
- un circuit de lecture **16** réalisé dans un substrat sous la surface de la matrice d'imagerie **12.** Le circuit de lecture **16** comprend un circuit d'adressage ligne par ligne **18** et, pour chaque colonne de la matrice d'imagerie **12,** un circuit de mesure **22** apte à être connecté à chaque bolomètre d'imagerie de leur colonne par des moyens électriques ;
- une matrice de bolomètres de compensation **24** comprenant un ou plusieurs circuits de compensation **26** disposés en regard de chaque colonne de la matrice d'imagerie **12,** mais au-delà du format de la matrice d'imagerie. La matrice **24** comporte par exemple, pour chaque colonne de la matrice d'imagerie **12,** un circuit de compensation **26** apte à être connecté à chaque bolomètre d'imagerie de la colonne ; et
- une unité de traitement d'informations **28** connectée au circuit de lecture **16** et mettant en oeuvre un algorithme de traitement des signaux délivrés par celui-ci pour déterminer une image infrarouge de la scène projetée sur la matrice **12.**

Une telle structure de détecteurs bolométriques est classique et ne sera pas expliquée plus en détail par la suite. Pour de plus amples informations, on pourra utilement se reporter par exemple au document « Uncooled amorphous silicon enhancement for $25\mu$m pixel pitch achievement » de E. Mottin et al, Infrared Technology and Application XXVIII, SPIE, vol. 4820.

Selon l'invention, cette structure de détecteur est complétée par un circuit d'obturation thermique **30** de la matrice de bolomètres d'imagerie **12,** sous le contrôle des moyens d'adressage **18,** et formé de circuits de thermalisation, ou autrement dit, de commande de résistance **32** de la matrice **12** ligne par ligne, comme cela sera expliqué plus en détail ci-dessous. Le circuit d'obturation **30** comporte, pour chaque colonne de la matrice d'imagerie **12,** un circuit de thermalisation **32** apte à être connecté à chaque bolomètre d'imagerie de la colonne.

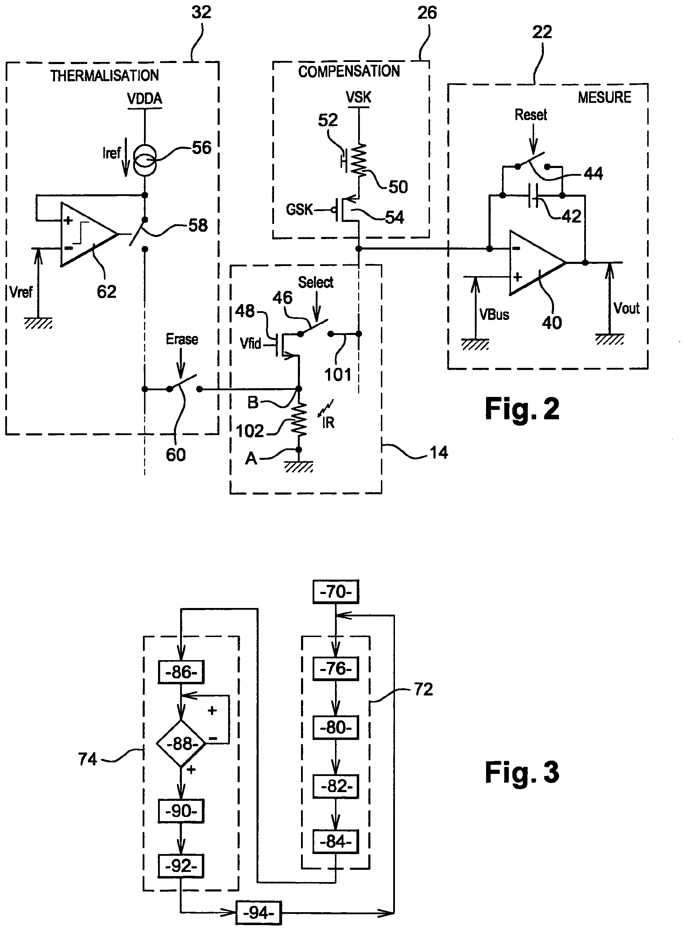

Sur la figure 2, on a illustré un exemple d'agencement élémentaire préféré :

- d'un point élémentaire d'image **14,** composé d'un bolomètre d'imagerie **102** de la matrice **12** et des éléments **46** et **48** nécessaires à sa mise en oeuvre ;
- d'un circuit de mesure **22** du circuit de lecture **16** pour la mesure du bolomètre d'imagerie **102 ;**
- d'un circuit de compensation **26** de la matrice **24** pour la compensation d'un courant de mode commun circulant dans le bolomètre d'imagerie **102** lors de la lecture de celui-ci ; et
- d'un circuit de thermalisation **32** du circuit d'obturation thermique **30** pour la thermalisation du bolomètre d'imagerie **102.**

Le bolomètre **102** est soumis à un rayonnement infrarouge IR issu d'une scène et est connecté à la masse par une première borne **A.**

Le circuit de mesure **22** comprend :

- un amplificateur opérationnel **40,** dont la borne non inverseuse (+) est mise à une tension constante *Vbus* prédéterminée ;
- un condensateur **42,** de capacité $C_{int}$ prédéterminée, connecté entre une borne inverseuse (-) de l'amplificateur **40** et la sortie de celui-ci ;
- un interrupteur de remise à zéro **44** connecté en parallèle du condensateur **42** et pilotable au moyen d'un signal « Reset » commandé par le circuit d'adressage **18 ;**
- un interrupteur **46** de lecture, pilotable au moyen d'un signal « Select » commandé par le circuit d'adressage **18,** et connecté à la colonne de lecture **101,** elle-même connectée à la borne inverseuse (-) de l'amplificateur opérationnel ; et
- un premier transistor MOS **48** d'injection situé dans le point élémentaire **14,** dont la grille est mise à une tension *Vfid* constante prédéterminée, dont la source est connectée à une seconde borne **B** du bolomètre **102,** et dont le drain est connecté à l'autre borne de l'interrupteur **46** de lecture.

Le circuit de compensation **26** du courant de mode commun traversant le bolomètre d'imagerie **102** comprend un bolomètre résistif de compensation **50** réalisé dans le même matériau que le bolomètre d'imagerie **102,** présentant une faible résistance thermique vers le substrat et pourvu, de manière optionnelle, d'un écran **52** contre le rayonnement issu de la scène.

Le bolomètre de compensation **50** est connecté à l'une de ses bornes à une tension prédéterminée *VSK* et à l'autre de ses bornes à la source d'un second transistor MOS d'injection **54** du circuit **26**. Le drain du transistor **54** est connecté à l'entrée inverseuse (-) de l'amplificateur opérationnel **40** et la grille est connectée à une tension prédéterminée *GSK.*

L'agencement et le fonctionnement des éléments venant d'être décrits est classique et ne seront donc pas expliqués plus en détail pour des raisons de concision. Pour de plus amples détails, on pourra par exemple se référer au document « Uncooled amorphous silicon enhancement for $25\mu$m pixel pitch achievement » de E. Mottin et al, Infrared Technology and Application XXVIII, SPIE, vol. 4820.

Selon un exemple de développement, il est prévu le circuit de thermalisation **32** apte à commander la résistance du bolomètre d'imagerie **102**.

Plus particulièrement, le circuit de thermalisation **32** comprend une source de courant 56 connectée à la borne **B** du bolomètre d'imagerie **102** au travers d'un premier et d'un second interrupteurs de thermalisation pilotables **58, 60,** ce dernier étant déporté dans le point d'imagerie élémentaire **14**. La source de courant **56** injecte dans le bolomètre d'imagerie **102** un courant d'intensité prédéterminée $I_{ref}$ lorsque les interrupteurs de thermalisation **58, 60** sont dans leur état fermé.

Le circuit de thermalisation **32** comporte également un comparateur **62,** dont une première borne est connectée, par exemple au travers des interrupteurs de thermalisation **58, 60**, à la borne **B** du bolomètre d'imagerie **102,** et dont une seconde borne est connectée à une tension de référence prédéterminée $V_{ref}$.

Le comparateur **62** est par ailleurs connecté au premier interrupteur de thermalisation **58,** dont il pilote l'état en fonction du résultat de la comparaison entre la tension $V_B$ de la borne **B** du bolomètre d'imagerie **102** et la tension de référence $V_{ref}$.

Enfin, l'état du second interrupteur de thermalisation **60** est piloté au moyen d'un signal d'effacement « Erase » par le circuit d'adressage **18**.

Un procédé de thermalisation et de lecture de la matrice d'imagerie **12** va maintenant être décrit en relation avec la figure 3.

Dans une première étape **70,** par exemple déclenchée après avoir mis sous tension le détecteur bolométrique **10 :**

- un pointeur de lecture $N_{lect}$ du circuit d'adressage **18** est initialisé à 1 ;
- une valeur de $V_{ref}$ et une valeur de $I_{ref}$ sont sélectionnées, d'une manière qui sera expliquée plus en détail par la suite ;
- les signaux « Reset », « Select » et « Erase » associé à chaque bolomètre d'imagerie **102** de la matrice **12** sont réglés par le circuit d'adressage **18** sur zéro, valeur qui correspond à l'état ouvert des interrupteurs **44, 46, 60**.

L'étape **70** se poursuit alors par une macro étape **72** de lecture de la ligne $N_{lect}$ de la matrice **12**.

L'étape **72** de lecture comporte une étape **76** de réglage du signal « Reset » des circuits de mesure **22** par le circuit d'adressage **18** sur une valeur positive, de manière à fermer les interrupteurs de remise à zéro **44**. Les condensateurs **42** de la ligne $N_{lect}$ sont donc déchargés quasi instantanément.

L'étape **76** se poursuit par une étape **80** dans laquelle les signaux « Reset » sont basculés sur zéro par le circuit d'adressage **18** de manière à ouvrir les interrupteurs de remise à zéro **44**. Parallèlement, toujours en **80,** les signaux « Select » sont basculés par le circuit d'adressage **18** sur une valeur positive de manière à fermer les interrupteurs de lecture **46** de la ligne $N_{lect}$.

Ainsi pour chaque agencement décrit à la figure 2 de la ligne $N_{lect}$, la différence entre le courant traversant le bolomètre d'imagerie **102** et le courant traversant le bolomètre de compensation **50** est alors intégrée par le condensateur **42**.

Comme le courant traversant le bolomètre de compensation **50** est sensiblement égal au courant de mode commun traversant le bolomètre d'imagerie **102,** la différence de courant en entrée du circuit de mesure **22** correspond alors sensiblement à une variation $\Delta R_{bolo}$ de la résistance $R_{bolo}$ du bolomètre d'imagerie **102** induite par le rayonnement issu de la scène et incident sur celui-ci.

Lors d'une étape suivante **82,** la différence de courant à l'entrée du circuit **22** est intégrée pendant une durée Tint dans la capacité **42**.

Une fois le temps d'intégration écoulé, le circuit d'adressage **18** bascule, en **84,** la valeur des signaux « Select » de la ligne $N_{lect}$ sur zéro, de manière à ouvrir les interrupteurs de lecture **46** correspondants. A l'issue de l'étape **84,** tous les signaux « Select » et « Reset » sont à zéro. Les interrupteurs respectifs sont donc ouverts.

La tension $V_{out}$ en sortie d'un intégrateur **42** est alors l'image de la variation de résistance $\Delta R_{bolo}$ du bolomètre d'imagerie **102** associé.

La macro-étape **74** de thermalisation de la ligne $N_{lect}$ qui suit l'étape **84,** comprend quant à elle une étape **86** dans laquelle les signaux « Erase » de cette ligne sont basculés sur une valeur positive par le circuit d'adressage **18** de manière à fermer les interrupteurs de thermalisation **60** de cette ligne.

On notera qu'à cet instant, les interrupteurs de lecture **46** de la ligne $N_{lect}$ sont dans leur état ouvert.

Dans chaque agencement, tels qu'illustrés à la figure 2, de la ligne $N_{ther}$, le bolomètre d'imagerie **102** est ainsi polarisé par l'injection dans celui-ci du courant $I_{ref}$ et subit donc un échauffement par effet joule.

Dans le cas des matériaux semiconducteurs classiquement utilisés pour réaliser un bolomètre d'imagerie, comme par exemple du silicium amorphe ou un oxyde de vanadium, le coefficient thermique du matériau est négatif et la résistance $R_{bolo}$ du bolomètre d'imagerie **102** évolue selon une loi d'Arrhenius selon la relation

$$R_{bolo} = R_{abs} \, . \, exp(Ea/K.T) \quad (1)$$

où :

- $Ea$ est une énergie d'activation thermique de la conductivité du matériau utilisé pour la formation du bolomètre ;
- $K$ est la constante de Boltzmann ;
- $T$ est la température absolue du bolomètre ; et
- $R_{abs}$ est la valeur asymptotique de la résistance du bolomètre lorsque l'échauffement de celui-ci est très élevé.

Le coefficient de variation relative en température de la résistance $R_{bolo}$ qui découle de la relation (1) est exprimé par :

$$TCR = 1/R \, (dR/dT) = -Ea/(K \, T^2)$$

Cette grandeur est donc négative, la résistance $Rb$ diminue lorsque la température augmente.

Lors d'une étape suivante **88,** un test est mis en oeuvre pour déterminer si la résistance $R_{bolo}$ du bolomètre d'imagerie **102** est sensiblement égale à une résistance prédéterminée $R_{ref}$. Si le résultat de ce test est négatif, la thermalisation du bolomètre d'imagerie **102** se poursuit. Sinon, l'étape de test **88** se termine par l'arrêt de la thermalisation du bolomètre d'imagerie **102** par la déconnexion, en **90,** de la source de courant **56** correspondante.

Plus particulièrement, les étapes **88** et **90** sont mises en oeuvre par le comparateur **62.**

Selon la loi d'Ohm, la tension $V_{bolo}$ aux bornes du bolomètre d'imagerie **102** s'exprime selon la relation :

$$V_{bolo} = V_B = R_{bolo} \times I_{ref} \qquad (2)$$

Le comparateur **62** bascule alors le second interrupteur de thermalisation **58** dans son état ouvert, déconnectant ainsi la source de courant **56** du bolomètre d'imagerie **102,** lorsque la tension $V_{ref}$ est sensiblement égale à $V_B$, c'est-à-dire lorsque $R_{bolo}$ vérifie la relation :

$$R_{bolo} = R_{ref} = \frac{V_{ref}}{I_{ref}} \qquad (3)$$

La thermalisation du bolomètre d'imagerie **102** est ainsi terminée.

On notera que la résistance $R_{ref}$ que présente le bolomètre d'imagerie **102** en fin de thermalisation est indépendante de la quantité de rayonnement infrarouge reçu par le celui-ci.

On peut en effet montrer à partir de la relation (1) que l'échauffement $\theta$ subi par le bolomètre d'imagerie **102** au moment de la déconnexion de la source de courant **56** par le comparateur **62** s'approxime selon la relation :

$$\theta = \frac{1}{TCR} \times \ln\left(\frac{V_{ref}}{R_0 \times I_{ref}}\right) \qquad (4)$$

Comme on peut le constater, cet échauffement ne dépend pas du rayonnement infrarouge reçu, mais uniquement de paramètres internes au bolomètre d'imagerie **102** ainsi que de paramètres du circuit de thermalisation **32**, à savoir le courant $I_{ref}$ et la tension $V_{ref}$.

L'étape de thermalisation de la ligne $N_{lect}$ se termine enfin par une étape **92**, au cours de laquelle le circuit d'adressage **18** bascule les signaux « Erase » de cette ligne sur zéro afin d'ouvrir les interrupteurs de thermalisation **60** correspondants.

L'étape **74** de lecture et de thermalisation se poursuit ensuite par une étape **94**, déclenchée une fois celle-ci terminée, dans laquelle la valeur du pointeur de lecture $N_{lect}$ est réglée sur $N_{lect}$ + 1 (mod$n$), où mod est l'opérateur modulo. En effet, une fois $N_{lect} = n$, la prochaine étape sera $N_{lect} = 1$.

L'étape **94** boucle alors en entrée de l'étape **72** pour la lecture des lignes suivantes.

Les valeurs du courant $I_{ref}$ et de la tension $V_{ref}$ sont sélectionnées lors de l'étape **70** de manière à ce que :

- la durée d'échauffement nécessaire pour que la résistance $R_{bolo}$ d'un bolomètre d'imagerie atteigne la valeur $R_{ref}$ soit la plus faible possible. Ainsi, le cadencement des signaux « Reset » et « Select » de l'état de la technique peut être conservé ;
- la valeur de $V_{ref}$ soit inférieure à la tension $V_B$ de la borne **B** du bolomètre d'imagerie **102** lors du déclenchement de la thermalisation de celui-ci. Ainsi, la condition de commutation du comparateur **62** associé n'est pas d'emblée satisfaite. Dans le cas contraire, la thermalisation du bolomètre de référence **26** serait inhibée.

Les valeurs du courant $I_{ref}$ et de la tension $V_{ref}$ sont déterminées lors d'une phase préliminaire, par exemple en usine pendant la phase de calibration du détecteur classiquement mise en oeuvre avant la mise en service de celui-ci. Une telle phase préliminaire comporte notamment les étapes suivantes :

a) le détecteur est mis en route et soumis à des conditions d'environnement thermique de référence prédéterminées, à savoir une température connue et stable de son plan focal et des conditions radiatives uniformes en provenance de la scène, obtenues typiquement par exposition devant un corps noir porté à la température maximale qu'est supposé détecter le détecteur lors de son utilisation,

b) les bolomètres d'imagerie **102** sont soumis à un courant $I_{ref}$ de valeur proche de celle utilisée pour polariser les bolomètres d'imagerie lors de la phase de lecture de ceux-ci, ainsi qu'à une tension $V_{ref}$ de comparaison élevée, par exemple sensiblement égale à la tension *VDDA*. A ce stade, les résistances des bolomètres d'imagerie **102** ne sont pas modifiées par les circuits de thermalisation **32**, et les tensions $V_{out}$ correspondantes en sortie des circuits de mesure **22** correspondent donc à la distribution classique des niveaux de sortie continu des bolomètres d'imagerie **102** illuminés par une scène uniforme, c'est-à-dire la dispersion dite « d'offset » ;

c) la tension $V_{ref}$ est ensuite progressivement diminuée. Un phénomène d'écrêtage apparaît alors dans les basses valeurs de la distribution des tensions $V_{out}$ lorsque les résistances des bolomètres d'imagerie les plus résistifs sont thermiquement modifiées par les circuits de thermalisation 32 du fait de la baisse progressive de la tension $V_{ref}$. La diminution de la tension $V_{ref}$ est stoppée lorsque sensiblement toutes les tensions $V_{out}$ sont modifiés à la hausse et proches de la tension $V_{out}$ la plus élevée observée avant la diminution de la tension $V_{ref}$ ;

d) le courant $I_{ref}$ et la tension $V_{ref}$ ainsi obtenus sont alors utilisés pour la thermalisation des bolomètres d'imagerie **102** lors de l'utilisation du détecteur.

Le processus de réglage du courant $I_{ref}$ et de la tension $V_{ref}$ venant d'être décrit peut être réalisé de manière manuelle ou de manière automatique. Dans ce dernier cas, le processus est mis en oeuvre par l'unité de traitement d'informations **28** qui produit en sortie les niveaux numériques de commande $I_{ref}$ et $V_{ref}$, lesquels sont traduits ensuite en courant et en tension analogiques par des moyens classiques de conversion numérique-analogique. L'unité de traitement d'informations **28** met alors en oeuvre, par voie logicielle par exemple, une exploitation des tables de niveau continu correspondant aux tensions $V_{out}$ formées à chaque étape de décrémentation de la tension $V_{ref}$.

On notera que pour obtenir la résistance $R_{ref}$ souhaitée, il existe une infinité de couples $(I_{ref}, V_{ref})$ possibles. Le choix d'un courant $I_{ref}$ proche du courant de polarisation traversant les bolomètres d'imagerie **102** sous l'effet de la polarisation par les transistors **48** associés lors de la phase de lecture est cependant préféré, dans la mesure où le temps de thermalisation de ceux-ci qui en résulte est compatible avec les contraintes temporelles auxquelles est par ailleurs soumis le détecteur (temps d'intégration notamment). Cependant, un courant $I_{ref}$ plus élevé peut être préféré pour réduire la durée de thermalisation conduisant à la résistance $R_{ref}$. De préférence, le courant $I_{ref}$ est constant et appliqué directement à l'aide d'éléments de circuiterie traditionnels analogiques, ce qui simplifie la conception des circuits de thermalisation.

Dans l'exemple précédemment décrit, les macro-étapes de lecture et de thermalisation, respectivement **72** et **74,** s'enchaînent. La matrice est ainsi adressée, lue puis thermalisée ligne après ligne.

Dans un autre exemple, un second pointeur $N_{ther}$ est introduit, adressant la ligne correspondante, afin de thermaliser une ligne différente de la ligne lue.

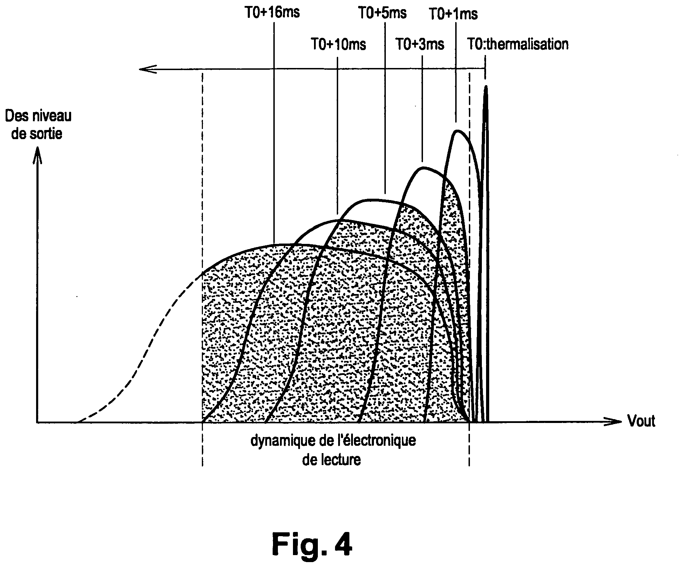

Le nombre de lignes $N_{exp}$ séparant la lecture de la thermalisation est avantageusement sélectionné pour commander la dynamique de la scène détectée par la matrice d'imagerie **12,** comme cela est illustré sur la figure 4.

Sur la figure 4, il est tracé une série temporelle de distributions des niveaux de sortie de la population de bolomètres d'imagerie **102** d'une ligne N de la matrice **12** (ou de la matrice 12 entière après accumulation des distributions des M lignes) Chaque distribution correspond à un temps d'attente différent entre la thermalisation et la lecture. La figure 4 illustre le cas où la dynamique thermique de la scène observée excède largement la dynamique de scène du détecteur en l'absence du dispositif de thermalisation selon l'invention, qu'on appellera dynamique de scène référence.

A t = T0, la ligne N subit une thermalisation, comme cela a été décrit précédemment. La dispersion en population des températures des bolomètres est alors très faible. Cette dispersion est principalement inhérente à la dispersion naturelle dans la construction du détecteur, les bolomètres d'imagerie et les connexions entre les divers éléments du détecteur n'étant pas strictement identiques.

On notera que la durée de thermalisation d'un bolomètre est très sensiblement inférieure à sa durée d'exposition, c'est-à-dire la durée séparant sa thermalisation de sa lecture. A titre d'exemple numérique, la durée d'exposition est de l'ordre de la dizaine de millisecondes alors que la durée de thermalisation est de l'ordre de la dizaine de microsecondes.

Une fois la thermalisation terminée, les bolomètres d'imagerie de la ligne N se refroidissent. Chaque bolomètre d'imagerie a sa propre vitesse de refroidissement en fonction du rayonnement thermique qu'il reçoit (de la température de l'élément de scène qui le concerne). On observe un étalement progressif en fonction du temps, de la distribution du signal formé par la ligne N lorsqu'on la lit à la fin du temps d'exposition, induite par la distribution des températures respectives des bolomètres de cette ligne. La différence de température entre le bolomètre le plus froid et le bolomètre le plus chaud de la ligne N, augmente donc avec le temps, ainsi que la différence des niveaux de sortie extrêmes correspondants, comme illustré sur la figure 4.

Au-delà d'une durée d'exposition de l'ordre de quelques constantes de temps thermique des bolomètres, la distribution se stabilise progressivement à l'équilibre thermique et ne s'élargit plus.

Par ailleurs, le circuit de mesure **22** présente lui-même une dynamique de lecture fixe, définie comme la différence entre les tensions maximale et minimale que peut délivrer la sortie des amplificateurs opérationnels **40.** Une telle dynamique est illustrée entre les deux lignes pointillées.

Comme on peut le constater, dans l'hypothèse retenue ou la scène présente une dynamique supérieure à la dynamique de référence, si une durée d'exposition trop importante s'écoule entre la thermalisation de la ligne N et sa lecture, par exemple 16 millisecondes, la distribution des signaux de sortie est écrêtée par la dynamique de lecture. Une partie importante des bolomètres d'imagerie, correspondant à des températures froides, ne peut pas être lue de manière représentative par le circuit de lecture du détecteur.

Le détecteur décrit permet d'adapter la dynamique de scène sensible par le détecteur par ajustement du temps d'exposition.

De manière avantageuse, la lecture de la ligne N est déclenchée avant que la dynamique électrique de sortie induite par la scène ne soit plus importante que la dynamique du circuit de lecture, par le choix approprié du nombre de lignes $N_{exp}$, où $N_{exp}$ est le nombre de lignes séparant le pointeur de thermalisation $N_{ther}$ du pointeur de lecture $N_{lect}$.

Il s'écoule en effet une durée d'exposition $T_{exp} = \dfrac{N_{exp}}{F_{ligne}}$, où $F_{ligne}$ est une fréquence d'adressage prédéterminée du circuit d'adressage **18,** entre la lecture et la thermalisation de la ligne N. Cette durée est donc pilotable par le choix de $N_{exp}$.

De manière préférée, le temps d'exposition $T_{exp}$ est choisi de façon à ce que la dynamique de l'image en sortie induite par la scène soit inférieure ou égale à celle de la lecture.

Si la température du plan focal dérive sensiblement de la température pour laquelle le courant $I_{ref}$ et la tension $V_{ref}$, et donc la résistance $R_{ref}$, ont été déterminés, il existe un risque, pour les températures de scène aux marges de la dynamique initialement définie, de voir la résistance $R_{ref}$ être sensiblement plus faible que la résistance la plus faible des bolomètres d'imagerie **102** à l'équilibre thermique, ou bien de rencontrer des difficultés pour imposer la résistance $R_{ref}$ à quelques bolomètres, voire à l'ensemble des bolomètres, à l'issue de la phase de thermalisation.

Dans une première variante, le détecteur est équipé d'éléments de régulation de la température du plan focal du type Peltier et/ou des éléments de chauffage du plan focal afin de réguler la température de celui-ci autour de la température utilisée pour réaliser le réglage du courant $I_{ref}$ et de la tension $V_{ref}$.

Dans une seconde variante, le détecteur est équipé d'un capteur mesurant la température du plan focal et un étalonnage préalable de tensions $V_{ref}$ dans le cas d'un courant $I_{ref}$ choisi constant, ou de couples courant/tension ($I_{ref}$, $V_{ref}$), est interrogée en fonction de la mesure de température pour déterminer le couple de courant/tension utilisé.

Ces variantes supposent donc, soit un détecteur régulé en température et nécessitant ainsi un équipement spécifique couteux et encombrant, soit la détermination longue et coûteuse d'un étalonnage en usine.

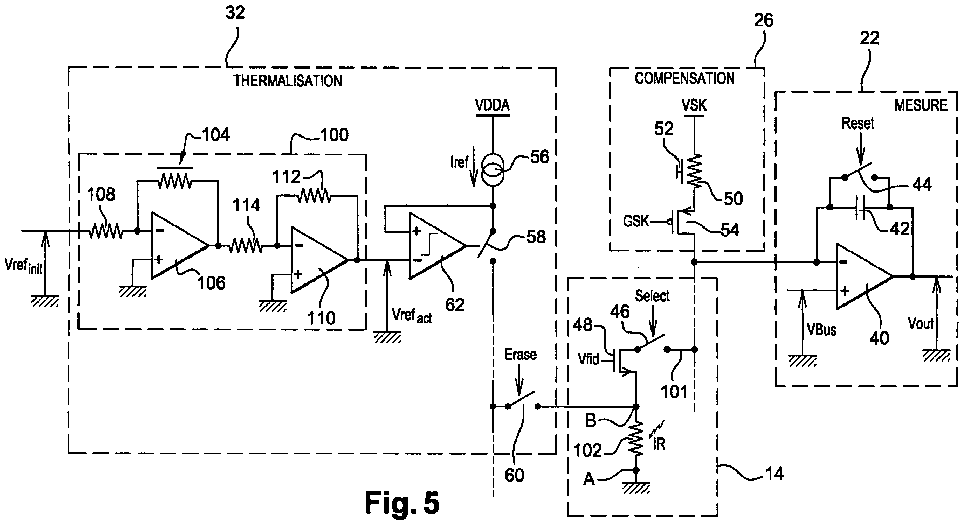

La figure 5 illustre un mode de réalisation selon l'invention permettant d'insensibiliser la dynamique de scène des variations de la température du plan focal tout en évitant l'emploi d'éléments de régulation thermique ou l'acquisition d'un étalonnage en température.

Selon ce mode de réalisation, le courant $I_{ref}$ est choisi constant et la tension $V_{ref}$ est commandée en fonction de la température du plan focal dans lequel se situe le substrat.

Le module de thermalisation **32** selon ce mode de réalisation reproduit le circuit décrit en relation avec la figure 2, mais comprend en outre un circuit **100** de commande de la tension $V_{ref}$ appliquée à l'entrée inverseuse (-) du comparateur **62**. Pour un détecteur matriciel, ce circuit **100** est typiquement unique, disposé par exemple en bout de la ligne des circuits de thermalisation **32,** et sa sortie définit le potentiel d'un bus de distribution de la tension $V_{ref}$ vers chaque colonne, comme schématisé sur la figure 5.

Le circuit de commande **100** comporte un bolomètre **104,** identique ou similaire aux bolomètres de compensation **50,** de résistance $R_{sonde}$ et branché en contre-réaction d'un amplificateur opérationnel **106** entre la borne inverseuse (-) et la sortie de celui-ci, et une résistance fixe **108,** connectée entre la borne inverseuse (-) de l'amplificateur **106** et une tension de référence initiale $V_{ref\text{-}init}$.

Le bolomètre **104** est insensibilisé au rayonnement de la scène de sorte que la valeur de sa résistance dépend essentiellement de la température du substrat.

Le courant $I_{ref}$ et la tension $V_{ref\text{-}init}$ sont déterminés pour une température du plan focal prédéterminée lors d'une étape de réglage telle que décrite précédemment et la valeur $R_{sonde\text{-}init}$ de la résistance **108** sensiblement égale à celle à la résistance du bolomètre **104** lorsque celui-ci est soumis aux conditions thermiques utilisées lors de cette étape de réglage. Le rapport ($R_{sonde}$ / $R_{sonde\text{-}init}$) définit le gain de la correction apporté à la tension initiale $V_{ref\text{-}init}$.

Le circuit de commande **100** comporte également, pour inverser la polarité en sortie de l'amplificateur **106,** un amplificateur opérationnel **110** contre-réactionné par une résistance fixe **112** entre sa borne inverseuse (-) et sa sortie, et une résistance fixe **114** de même valeur que la résistance **112,** connectée entre la sortie de l'amplificateur **106** et la borne inverseuse (-) de l'amplificateur **110.** La sortie de ce dernier est connectée à la borne inverseuse (-) du comparateur **62,** définissant ainsi la tension $V_{ref\text{-}act}$ utilisée pour la thermalisation du bolomètre d'imagerie **102.**

Ainsi, le comparateur **62** est référencé en continu à la tension $V_{ref\text{-}act}$ selon la relation :

$$V_{ref-act} = V_{ref-init} \times \frac{R_{sonde}}{R_{sonde-init}} \qquad (5)$$

La valeur $R_{sonde}$ de la résistance du bolomètre **104** étant essentiellement dictée par la température du substrat, la correction relative de la tension $V_{ref}$ fournie au comparateur **62** est donc égale à la variation relative attendue de la résistance $R_{ref}$ induite par la variation de température du substrat, par rapport à la résistance $R_{ref\text{-}init}$ retenue pour déterminer la tension $V_{ref\text{-}init}$ à la température initiale. Ainsi, l'application du processus de thermalisation impose pour tous les bolomètres d'imagerie une valeur de résistance actualisée $R_{ref\text{-}act}$ adaptée à la température courante du plan focal.

En d'autres termes, la tension $V_{ref\text{-}act}$ en sortie du circuit de commande **100,** qui se comporte comme un « suiveur de température », reproduit proportionnellement et naturellement les variations de résistance de la sonde bolométrique **104,** laquelle répond aux variations de température du substrat, sans qu'il soit requis de connaître ladite température, et se maintient continuellement au voisinage du point idéal de fonctionnement qui aura été initialement choisi lors de la phase préliminaire de réglage. Alternativement, plutôt qu'une commande de la tension $V_{ref\text{-}act}$ en fonction de la température, une commande selon le même principe du courant $I_{ref}$ est mise en oeuvre.

Dans un autre mode de réalisation, la consigne de tension appliquée au comparateur **62** du circuit de thermalisation est déterminée de manière numérique par l'unité **28** de traitement d'information en fonction d'une mesure de la température du substrat par une sonde de température, le courant $I_{ref}$ restant par ailleurs constant.

L'unité **28** de traitement d'informations fournit ainsi une consigne de tension de référence actualisée $V_{ref\text{-}act}$ selon la relation :

$$V_{ref\text{-}act} = V_{ref\text{-}init}\,.exp\,[Ea.(1/T - 1/T_{ref})] \qquad (6)$$

où $V_{ref\text{-}init}$ est la tension initialement définie comme décrit précédemment, $T$ est la température fournie par la sonde à l'instant considéré et $T_{ref}$ est la température fournie par la sonde lors du réglage initial, correspondant à la tension $V_{ref\text{-}init}$.

Les bolomètres d'imagerie **102** sont ainsi thermalisés à la résistance $R_{ref\text{-}act} = \dfrac{V_{ref\text{-}act}}{I_{ref}}$ et donc en fonction de la température courante du substrat.

La relation d'Arrhenius selon la relation (6) n'est qu'un cas typique, car l'objet générique de ce mode de réalisation est de calculer la tension $V_{ref\text{-}act}$ selon un modèle numérique apte à produire l'actualisation de $V_{ref}$ la mieux adaptée au maintien des conditions optimales de fonctionnement selon la température du substrat. Ce peut être une autre relation, définie par exemple par ajustement à un étalonnage empirique du comportement de la résistance du bolomètre d'imagerie en fonction de la température du substrat, pour les conditions de scène correspondant au réglage initial.

Alternativement, c'est le courant $I_{ref}$ qui est commandé en fonction de la température du substrat selon une estimation du même type que la relation (6) alors que la tension $V_{ref}$ est gardée constante.

En commandant la thermalisation en fonction de la température du plan focal, la valeur courante de la résistance de référence à laquelle sont portés tous les bolomètres d'imagerie reste constamment positionnée comme il convient, c'est-à-dire au voisinage de la valeur minimale de la distribution naturelle des résistances des bolomètres d'imagerie lorsque le détecteur observe une scène uniforme à la température maximale de sa dynamique de scène, et cela quelle que soit la température du plan focal.

En d'autres termes, le détecteur selon ces variantes présente une dynamique de scène au premier ordre indépendante des dispersions naturelles des résistances des bolomètres d'imagerie, quelle que soit la température du plan focal. Or la dynamique de scène des détecteurs selon l'état de l'art est au premier ordre limitée, du côté des températures de plan focal élevées, par ces dispersions naturelles de résistances. Il résulte donc de la mise en oeuvre du détecteur selon ces variantes de l'invention un gain substantiel de dynamique, en sus des avantages déjà exposés.

On notera que les formes de circuits utilisés pour la commande en température de la résistance de référence, qu'elles soient analogiques ou numériques, permettent non seulement de maintenir le positionnement adéquat de la thermalisation lorsque la température opératoire évolue, mais aussi d'assurer ce positionnement adéquat lorsque les résistances des bolomètres évoluent en elles-mêmes au cours du temps, à température constante. En effet, les matériaux sensibles intégrés dans les membranes bolométriques présentent une tendance à dériver très lentement, mais de manière sensiblement uniforme, au cours de la vie du détecteur. Cette dérive limite au fil du temps la pertinence des réglages de stimuli initiaux même si le détecteur fonctionne à une température constante stabilisée.

Grâce à l'invention, on obtient :

- une annulation sensible de la mémoire thermique de la matrice d'imagerie **12** et donc des effets de traînée. En effet, avant chaque lecture, les résistances $R_{bolo}$ des bolomètres d'imagerie sont réglées sur une valeur de référence $R_{ref}$ indépendante de la scène. Ainsi, seules les variations de résistance ayant eu lieu pendant l'exposition des bolomètres entre leur thermalisation et leur lecture sont détectées ;
- une commande simple et efficace de la dynamique de scène accessible par la matrice d'imagerie **12** au moyen de l'utilisation d'un pointeur de thermalisation dans la logique de cadencement ;
- une annulation substantielle des effets de dispersion spatiale d'offset et de gain, liée à la formation d'une résistance électrique sensiblement identique sur tous les bolomètres d'imagerie avant l'intégration du signal ;
- l'élimination potentielle du traditionnel système mécanique d'obturation optique (ou « shutter »), ce qui améliore notoirement l'intérêt économique, la continuité de service du détecteur lors d'une phase d'observation, et la durée de vie du système.
- Une augmentation substantielle de la dynamique de scène quelle que soit la température du plan focal si celle-ci est susceptible de variation.

Il a été décrit un mode de réalisation particulier de l'invention.

En variante, les sources de courant **56** sont pilotables. Par exemple, un profil de courant variable pendant la durée de thermalisation peut être préalablement déterminé de manière à encore optimiser cette durée.

De même, il a été décrit une thermalisation ligne à ligne de la matrice d'imagerie **12**. En variante, un circuit de thermalisation **32** peut être prévu pour chaque bolomètre d'imagerie **102** de la matrice d'imagerie **12**. Ceci est particulièrement avantageux lorsqu'un circuit de mesure **22** est également prévu pour chaque bolomètre d'imagerie. On obtient ainsi une thermalisation synchrone de tous les bolomètres d'imagerie, ce qui diminue sensiblement des artéfacts induits par une thermalisation ligne par ligne de la matrice d'imagerie.

De même, il a été décrit une thermalisation d'une matrice d'imagerie associée à une structure de compensation. On comprendra que la présente invention s'applique également à une matrice d'imagerie associée à une structure dite de « référence », telle que décrite dans le document « Performance of 320x240 Uncooled Bolometer-type Infrared Focal Plane Arrays » de Yutaka Tanake et al., Proc. SPIE, vol 5074.

De même encore, l'invention peut être appliquée à des modes de lecture qui mettent en oeuvre d'autres techniques de réjection du courant de mode commun, par exemple à l'aide de la polarisation d'un pont bolométrique de type pont de Wheatstone.

La présente invention trouve application dans le domaine des capteurs d'image à détection bolométrique, quelle que soit la bande de fréquences de détection ou le type de matériau bolométrique utilisé pour fabriquer les bolomètres d'imagerie et de référence, comme par exemple du silicium amorphe (a-Si), de l'oxyde de vanadium (Vox), un métal.

Par sa capacité d'adaptation à différentes températures de fonctionnement d'un capteur d'image à détection bolométrique, l'invention s'applique aussi bien aux capteurs régulés thermiquement qu'aux capteurs opérant à une température variable du plan focal (communément désigné par l'expression anglo-saxonne « TEC-LESS »), et cela qu'un obturateur ait été ou non prévu en association avec l'optique.

**Revendications**

1.  Système de détection d'un rayonnement infrarouge comportant :

    - un substrat ;
    - une matrice de bolomètres résistif d'imagerie (102) montée sur le substrat ; et
    - des circuits de mesure (22) aptes à être connectés électriquement aux bolomètres d'imagerie (102) pour une lecture de signaux électriques dépendants des résistances électriques de ceux-ci,

    *caractérisé* **en ce qu'**il comprend des moyens (32) de commande des résistances électriques des bolomètres d'imagerie (102) par injection de courant dans ceux-ci, le courant de chaque bolomètre d'imagerie (102) étant constant et la tension étant commandée en fonction de la température du substrat par un bolomètre (104) thermalisé au substrat, les moyens de commande (32) réglant les résistances électriques des bolomètres d'imagerie (102) sur une valeur commune au moins une fois par cycle de lecture la matrice de bolomètres par les circuits de mesure (22); système dans lequel les moyens de commande comportent

    - une source de courant (56) connectée à une borne du bolomètre d'imagerie au travers d'interrupteurs de thermalisation pilotables ;
    - un comparateur (62) dont une première borne non inverseuse est connectée au bolomètre d'imagerie au travers desdits interrupteurs et une seconde borne inverseuse est connectée à une tension de référence $Vref_{act}$, le comparateur étant par ailleurs connecté à un premier desdits interrupteurs dont il pilote l'état en fonction de l'évolution de sa tension de référence ;
    - un amplificateur (106) contre-réactionné entre sa borne inverseuse et sa sortie par un bolomètre (104) thermalisé au substrat, la sortie de l'amplificateur (106) formant une correction d'une résistance de référence initiale déterminée pour une température initiale prédéterminée ;
    - une résistance fixe (108), connectée entre la borne inverseuse de l'amplificateur (106) et une tension de référence initiale $Vref_{init}$ ;
    - un circuit d'inversion de polarité (110, 112, 114), connecté entre la sortie de l'amplificateur (106) et la borne inverseuse du comparateur.

2.  Système de détection d'un rayonnement infrarouge selon la revendication 1, *caractérisé* **en ce que** les moyens (32) de commande sont activés pour la commande de la résistance électrique d'un bolomètre d'imagerie après chaque lecture dudit bolomètre.

3.  Système de détection d'un rayonnement infrarouge selon la revendication 1 ou 2, *caractérisé* qu'il comprend en outre des moyens (18) de commande d'une dynamique thermique de scène accessible par le système en fonction d'une dynamique prédéterminée du circuit de mesure (22).

4.  Système de détection d'un rayonnement infrarouge selon la revendication 3, *caractérisé* **en ce que** les moyens de commande de la dynamique de scène comprennent des moyens (18) aptes à activer la lecture d'un bolomètre d'imagerie par le circuit de mesure (22) une fois écoulée une durée prédéterminée d'exposition depuis une désactivation des moyens (32) de commande de la résistance du bolomètre d'imagerie.

5. Système de détection d'un rayonnement infrarouge selon la revendication 4, *caractérisé en ce que* la durée d'exposition est sélectionnée pour que la dynamique thermique de scène soit inférieure ou égale à une dynamique correspondante du circuit de mesure (22).

6. Système de détection d'un rayonnement infrarouge selon l'une des revendications 3 à 5, *caractérisé :*

   - **en ce que** le circuit de mesure (22) est apte à lire la matrice ligne par ligne,
   - **en ce que** les moyens (32) de commande de la résistance sont aptes à commander les résistances électriques des bolomètres d'imagerie de la matrice ligne par ligne,
   - et **en ce que** le système comporte en outre des moyens (18) de cadencement de la lecture et de la commande des résistances électriques des bolomètres de sorte que la lecture d'une ligne de la matrice soit décalée d'un nombre prédéterminé de lignes de la commande des résistances électriques des bolomètres d'une ligne de la matrice.

7. Système de détection d'un rayonnement infrarouge selon l'une quelconque des revendications précédentes, *caractérisé en ce qu'*il comporte un circuit de commande de résistance associé à chaque bolomètre d'imagerie de la matrice bolométrique et apte à commander la résistance de celui-ci.

8. Système de détection d'un rayonnement infrarouge selon l'une quelconque des revendications 1 à 7, *caractérisé en ce qu'*il comporte un circuit de commande de résistance associé à chaque colonne de la matrice et apte à commander la résistance de chaque bolomètre de cette colonne.

9. Système de détection d'un rayonnement infrarouge selon la revendication 1, *caractérisé en ce que* les moyens (32) de commande comprennent, pour chaque bolomètre d'imagerie (102) :

   - une source de courant électrique (56) délivrant le courant de référence ($I_{ref}$) ;
   - des moyens (58, 60) de connexion de la source de courant (56) audit bolomètre pour l'injection du courant de référence ($I_{ref}$) dans celui-ci; et
   - des moyens (62) de déconnection de la source de courant (56) dudit bolomètre lorsqu'une tension à une borne (B) dudit bolomètre est sensiblement égale à une tension de référence prédéterminée.

10. Système de détection d'un rayonnement infrarouge selon la revendication 9, *caractérisé en ce que* la tension de référence est réglée à une valeur inférieure à une tension présente aux bornes (B) dudit bolomètre lors de la connexion de la source de courant (56) et lorsque le courant est sensiblement égal au courant de référence ($I_{ref}$).

11. Système de détection d'un rayonnement infrarouge selon la revendication 12, *caractérisé en ce que* les moyens de commande comprennent un capteur de température du substrat et une unité de traitement d'informations (28) apte à déterminer, en fonction de la mesure de température, une correction d'une résistance de référence initiale déterminée pour une température initiale prédéterminée

12. Procédé de lecture d'un bolomètre résistif d'imagerie (102) d'une matrice de bolomètres (12) constitutive d'un système de détection d'un rayonnement infrarouge selon la revendication 1, dans lequel la résistance du bolomètre (102) est réglée sur une valeur prédéterminée de résistance commune pour tous les bolomètres de la matrice (12) au moins une fois par cycle de lecture de celui-ci par injection de courant dans celui-ci.

**Patentansprüche**

1. Vorrichtung zum Erfassen von Infrarot-Strahlung, bestehend aus:

   - einem Substrat;
   - einer Bildgebungs-Widerstandsbolometer-Matrix (102) montiert auf dem Substrat; sowie
   - Messstromkreisen (22), die elektrisch mit den Bildgebungs-Bolometern (102) verbunden werden können, zur Ablesung der elektrischen Signale, die von deren elektrischen Widerständen abhängen.

*dadurch gekennzeichnet, dass* er Steuerungsvorrichtungen (32) für die elektrischen Widerstände der Bildgebungs-Bolometer (102) enthält, durch Einspeisen von Strom in diese, dabei ist der Strom jedes Bildgebungs-Bolometers (102) konstant und die Spannung wird gesteuert in Abhängigkeit von der Substrattemperatur durch einen am Substrat thermalisierten Bolometer (104), die Steuerungsvorrichtungen (32) regeln die elektrischen Widerstände der Bildgebungs-Bolometer (102) an einem gemeinsamen Wert, mindestens einmal pro Ableszyklus der Bolometer-Matrix durch die Messstromkreise (22);
System, in dem die Steuerungsvorrichtungen umfassen

- eine Stromquelle (56) verbunden mit einer Klemme des Bildgebungs-Bolometers über steuerbare Thermalisierungsschalter;
- ein Vergleicher (62) dessen erste, nicht-invertierende Klemme mit dem Bildgebungs-Bolometer über diese Schalter verbunden ist und eine zweite, invertierende Klemme die mit einer Referenzspannung Vref$_{act}$ verbunden ist, der Vergleicher ist außerdem mit einem ersten dieser Schalter verbunden, dessen Zustand er in Abhängigkeit von der Entwicklung seiner Referenzspannung steuert;
- ein Verstärker (106) gegenreagiert zwischen seiner invertierenden Klemme und seinem Ausgang durch einen auf dem Substrat thermalisierten Bolometer (104), wobei der Ausgang des Verstärkers (106) eine Korrektur eines anfänglichen Referenzwiderstandes bildet, der für eine vorher festgelegte Anfangstemperatur bildet.
- ein fester Widerstand (108), verbunden zwischen der invertierenden Klemme des Verstärkers (106) und eine anfängliche Referenzspannung Vref$_{init}$;
- einen Umpolungsstromkreis (110, 112, 114), verbunden zwischen dem Ausgang des Verstärkers (106) und der invertierenden Klemme des Vergleichers.

2. Erkennungssystem für Infrarot-Strahlung gemäß Anspruch 1, *dadurch gekennzeichnet, dass* die Steuerungsvorrichtungen (32) für die Steuerung des elektrischen Widerstandes eines Bildgebungs-Bolometers nach Ablesung dieses Bolometers aktiviert werden.

3. Erkennungssystem für Infrarot-Strahlung gemäß Anspruch 1 oder 2, *dadurch gekennzeichnet, dass* es außerdem Steuerungsvorrichtungen (18) für eine thermische Dynamik-Szene enthält, zugänglich für das System in Abhängigkeit von einer vorher festgelegten Dynamik des Messzyklus (22).

4. Erkennungssystem für Infrarot-Strahlung gemäß Anspruch 3, *dadurch gekennzeichnet, dass* die Steuerungsvorrichtungen für die Szene-Dynamik auch Vorrichtungen (18) umfassen, die in der Lage sind die Ablesung eines Bildgebungs-Bolometers über den Messstromkreis (22) zu aktivieren, sobald eine vorher festgelegte Expositionszeit seit der Deaktivierung der Steuerungsvorrichtungen (32) des elektrischen Widerstandes des Bildgebungs-Bolometers verstrichen ist.

5. Erkennungssystem für Infrarot-Strahlung gemäß Anspruch 4, *dadurch gekennzeichnet, dass* die Expositionszeit so gewählt wird, dass die thermische Dynamik-Szene kleiner oder gleich einer entsprechenden Dynamik des Messstromkreises (22) ist.

6. Erkennungssystem für Infrarot-Strahlung gemäß einem der Ansprüche 3 bis 5, *dadurch gekennzeichnet,*

- **dass** der Messstromkreis (22) in der Lage ist die Matrix Zeile für Zeile abzulesen,
- **dass** die Steuerungsvorrichtungen (32) in der Lage sind, die elektrischen Widerstände der Bildgebungs-Bolometer der Matrix Zeile für Zeile zu steuern,
- und **dass** das System außerdem die Mittel (18) zur Taktung der Ablesung und der Steuerung der elektrischen Widerstände eines Bildgebungs-Bolometers umfasst, so dass die Ablesung einer Zeile der Matrix um eine vorher festgelegte Anzahl Zeilen der Steuerung der elektrischen Widerstände der Bildgebungs-Bolometer einer Matrixzeile versetzt ist.

7. Erkennungssystem für Infrarot-Strahlung gemäß irgendeinem der vorstehenden Ansprüche 1, *dadurch gekennzeichnet, dass* es einen Widerstands-Steuerungsschaltkreis enthält, verknüpft mit einem Bildgebungs-Bolometer der biometrischen Matrix und in der Lage ist, dessen Widerstand zu steuern.

8. Erkennungssystem für Infrarot-Strahlung gemäß irgendeinem der Ansprüche 1 bis 7, *dadurch gekennzeichnet, dass* es einen Widerstands-Steuerungsschaltkreis umfasst, verknüpft mit jeder Spalte der Matrix und in der Lage, den Widerstand jedes Bolometers dieser Spalte zu steuern.

9. Erkennungssystem für Infrarot-Strahlung gemäß Anspruch 1, ***dadurch gekennzeichnet, dass*** die Steuerungsvorrichtungen (32) für jeden Bildgebungs-Bolometer (102) umfassen

- eine elektrische Stromquelle (56), die den Referenzstrom ($I_{ref}$) liefert;
- Mittel (58, 60) zur Verbindung der Stromquelle (56) mit dem genannten Bolometer, zum Einspeisen des Referenzstromes ($I_{ref}$) in diesen; und
- Mittel (62), um die Stromquelle (56) dieses Bolometers abzutrennen, wenn die Spannung an einer Klemme (B) dieses Bolometers deutlich gleich einer vorher festgelegten Referenzspannung ist.

10. Erkennungssystem für Infrarot-Strahlung gemäß Anspruch 9, ***dadurch gekennzeichnet, dass*** die Referenzspannung auf einen Wert eingestellt wird, der unter einer an den Klemmen (B) dieses Bolometers liegt, beim Anschluss der Stromquelle (56) und wenn der Strom deutlich gleich dem Referenzstrom ($I_{ref}$) ist.

11. Erkennungssystem für Infrarot-Strahlung gemäß Anspruch 12, ***dadurch gekennzeichnet, dass*** die Steuerungsvorrichtungen einen Temperaturfühler des Substrats umfassen sowie eine Informationsverarbeitungseinheit (28), die in der Lage ist, in Abhängigkeit von der Temperaturmessung eine Korrektur eines anfänglichen Referenzwiderstandes, bestimmt für eine vorher festgelegte Anfangstemperatur, zu bestimmen.

12. Verfahren zur Ablesung eines Bildgebungs-Widerstandsbolometers (102) einer Bolometer-Matrix (12) als Teil eines Erkennungssystems für Infrarot-Strahlung gemäß Anspruch 1, in dem der Widerstand des Bolometers (102) mindestens einmal während des Ablesezyklus durch Einspeisen von Strom in den Bolometer auf einen vorher festgelegten, allen Bolometern der Matrix (12) gemeinsamen Widerstandswert eingestellt wird.

## Claims

1. System for detecting infrared radiation comprising :

   • a substrate ;
   • an array of resistive imaging bolometers (102) mounted on the substrate ; and
   • measuring circuits (22) capable of being electrically connected to the imaging bolometers (102) in order to read electrical signals depending on the electrical resistance of said bolometers,

   ***characterized* in that** it comprises means (32) for controlling the electrical resistance of imaging bolometers (102) by injecting current into said bolometers, the current of each imaging bolometer (102) being constant and the voltage being controlled as a function of the temperature of the substrate by means of a bolometer (104) thermalized to the substrate, the controlling means (32) adjusting the electrical resistances of the imaging bolometers (102) to a common value at least once every read cycle of the array of bolometers by the measuring circuits (22), the controlling means (32) of sais system comprising :

   • a current source (56) connected to a terminal of imaging bolometer via controllable thermalization switches ;
   • a comparator (62) whose first non-inverting terminal is connected, via said thermalization switches to imaging bolometers and whose second inverting terminal is connected to a reference voltage $V_{ref-act}$, the comparator being further connected to a first of said switches whose state it controls depending on the evolution of its reference voltage ;
   • a feedback connected amplifier (106) between its inverting terminal and its output by a bolometer (104) thermalized to the substrate, the output of the amplifier (106) forming a determined initial reference resistance correction for a predetermined initial temperature ;
   • a fixed resistance (108) connected between the inverting terminal of amplifier (106) and an initial reference voltage $V_{ref-init}$ ;
   • a reversing polarity circuit (110, 112, 114) connected between the output of the amplifier (106) and the inverting terminal of the comparatoir.

2. System for detecting infrared radiation as claimed in claim 1, wherein means (32) for controlling the resistance of the imaging bolometer is activated each time after the bolometer is read.

3. System for detecting infrared radiation as claimed in claim 1 or 2, wherein it further comprises means (18) for controlling a thermal dynamic range of the scene that can be accessed by the system as a function of a predetermined dynamic response of the measuring circuit (22).

4. System for detecting infrared radiation as claimed in claim 3, wherein the means for controlling the dynamic range of the scene comprises means (18) capable of activating reading of the imaging bolometer by a measuring circuit (22) once a predetermined exposure time has elapsed after deactivating means (32) for controlling the resistance of the imaging bolometer.

5. System for detecting infrared radiation as claimed in claim 4, wherein the exposure time is selected so that the dynamic range of scene is equal to or less than a corresponding dynamic response of the measuring circuit (22).

6. System for detecting infrared radiation as claimed in one of claims 3 to 5 :

   ▪ wherein the measuring circuit (22) is capable of reading the array one row at a time,
   ▪ wherein the means (32) for controlling the resistance of the bolometer is capable of controlling the resistance of the imaging bolometers of the array one row at a time, and
   ▪ wherein the system also comprises means (18) of clocking reading and control of the resistance of the bolometers so that reading a row in the array is offset a predetermined number of rows from controlling the resistances of bolometers of a row in the array.

7. System for detecting infrared radiation as claimed in any one of the preceding claims, wherein it comprises a circuit for controlling resistance associated with every imaging bolometer in the bolometric array and capable of controlling the resistance of the bolometer.

8. System for detecting infrared radiation as claimed in any one of claims 1 to 7, wherein it comprises a circuit for controlling resistance associated with every column in the array and capable of controlling the resistance of every bolometer in that column.

9. System for detecting infrared radiation as claimed in claim 1, wherein the controlling means (32) comprise for each imaging bolometer (32) :

   • a current source (56) for injecting a reference current ($I_{ref}$) ;
   • means (58, 60) for connecting the current source (56) to said bolometer for injecting the reference current ($I_{ref}$) in the later ;
   • means (62) for disconnecting the current source (56) off the bolometer when a voltage on a terminal (B) of said bolometer is substantially equal to a predetermined reference voltage.

10. System for detecting infrared radiation as claimed in claim 9, wherein the reference voltage is adjusted to a value less than a voltage across the terminals of said bolometer during connection of the current source (56) and when the current is substantially equal to the reference current ($I_{ref}$).

11. System for detecting infrared radiation as claimed in claim 9, wherein the controlling means (32) comprise a sensor that detects the temperature of the substrate and an information processing unit (28) capable of determining, as a function of the temperature measurement, a determined initial reference resistance correction for a predetermined initial temperature.

12. Method for reading a resistive imaging bolometer in an array of bolometers that constitutes a system for detecting infrared radiation according to claim 1, in which the resistance of the bolometer is adjusted to a predetermined resistance value that is common to all the bolometers in the array at least once every read cycle of the bolometer by injecting current into it.

**Fig. 1**

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9835212 A

- US 20050029453 A

**Littérature non-brevet citée dans la description**

- Uncooled amorphous silicon enhancement for $25\mu$m pixel pitch achievement. **E. MOTTIN et al.** Infrared Technology and Application XXVIII. SPIE, vol. 4820

- **YUTAKA TANAKE et al.** Performance of 320x240 Uncooled Bolometer-type Infrared Focal Plane Arrays. *Proc. SPIE,* vol. 5074